# EUROPÄISCHE PATENTSCHRIFT

(11) **EP 3 623 547 B1**
(45) Veröffentlichungstag und Bekanntmachung des Hinweises auf die Patenterteilung: **18.08.2021**
(21) Anmeldenummer: 19000408.5
(22) Anmeldetag: 13.09.2019
(51) Int. Cl.: E04H 12/22, F16B 13/14

(54) **VERBINDUNGSVORRICHTUNG**
CONNECTING DEVICE
DISPOSITIF DE CONNEXION

(30) Priorität: 13.09.2018 AT 2832018
(43) Veröffentlichungstag der Anmeldung: 18.03.2020
(73) Patentinhaber: SIHGA GmbH, 4694 Ohlsdorf bei Gmunden (AT)
(72) Erfinder: Kaiser-Mühlecker, Benedikt, 4531 Kematen an der Krems (AT)

(56) Entgegenhaltungen:
- EP-A2- 2 072 837
- WO-A1-2008/156578

## Beschreibung

Die Erfindung betrifft eine Verbindungsvorrichtung für das starre Verankern einer Säule oder einer Wand eines Bauwerkes an einem Untergrund.

Die WO 2008/156578 A1 betrifft eine Beilagscheibe, welche vor der Montage als ringförmiger, klebstoffgefüllter Hohlkörper ausgeführt ist, bei der Montage als Ümringung um einen Gewindebolzen gelegt wird und zwischen einer am Gewindebolzen aufgeschraubten Gewindemutter und einem weiteren Teil, welcher von der Mantelfläche des Gewindebolzens aus radial absteht, und gegenüber dem Gewindebolzen unbeweglich ist, zu einem flachen Ring plattgedrückt wird, wobei der Klebstoff entweicht und eine Klebeverbindung zwischen der Gewindemutter und dem Gewindebolzen und eventuell auch dem weiteren Teil bildet.

Die DE 8510565 U1 und die WO 9708409 A1 zeigen jeweils eine Verbindungsvorrichtung für das Verbinden einer Holzsäule mit einem Untergrund. In verbautem Zustand ist der untere Teil der Verbindungsvorrichtung im Untergrund wie auch immer starr verankert und ragt von diesem mit einem Gewindebolzen von unten her in eine nach unten hin offene Sacklochbohrung an der Holzsäule. Die untere Fläche der Holzsäule liegt von oben her an einem plattenartigen Teil an, der durch den Gewindebolzen durchdrungen ist und selbst nach unten hin durch eine Gewindemutter die mit dem Gewindebolzen in Eingriff ist, abgestützt ist. Damit die Holzsäule gegen das Wegziehen nach oben hin formschlüssig gehalten ist, ragt ein Stift quer zur Längsrichtung von Holssäule und Gewindebolzen durch beide hindurch. Durch Verstellen der Gewindemutter ist die Höhenposition der Säule einstellbar. Bezüglich Neigung und seitlicher Verschiebung der Holzsäule gegenüber dem Untergrund gibt es keinen bzw. fast keinen Einstellbereich. Die für das Anbringen des besagten Stiftes erforderliche Bohrung in der Säule ist umständlich und nur mit viel handwerklichem Geschick erstellbar und kann auch einen erheblichen optischen Nachteil bedeuten.

Die Schriften DE 19503653 A1, DE 3634266 A1, EP 2434074 A2 und GB 2518225 A zeigen ebenfalls Verbindungsvorrichtungen für das Verbinden einer Säule oder eines Mastes mit einem Untergrund, wobei vom Untergrund her ein bolzenartiger Teil in eine Bohrung an der Unterseite der Säule bzw. des Mastes hineinragt. In fertigem Zustand ist der bolzenartige Teil mit der Mantelfläche der Bohrung verklebt. Der Klebstoff wird vor dem Einstecken des bolzenartigen Teils in die Bohrung eingebracht indem er an die Wand der Bohrung geschmiert wird. Es ist nicht einfach, die richtige Menge Klebstoff in der richtigen Weise anzuordnen, sodass eine passend großflächige Klebung erfolgt und ohne dass eine erhebliche Menge Klebstoff unpassend austritt. Obendrein besteht keine bis kaum eine Einstellbarkeit der Position der Säule bzw. des Mastes gegenüber dem Untergrund.

Die der Erfindung zu Grunde liegende Aufgabe besteht darin eine Verbindungsvorrichtung für das starre Verankern einer Säule oder einer Wand an einem Untergrund bereitzustellen, wobei gegenüber den besprochenen Bauweisen bei der Montage ein höherer Arbeitskomfort und ein größerer Einstellbereich der Position der Säule bzw. der Wand gegenüber dem Untergrund erreichbar sein sollen, ohne dass dafür die Festigkeit leidet und ohne dass dafür ein seitlicher Oberflächenbereich der Säule bzw. der Wand durchbrochen werden muss.

Für das Lösen werden vom besprochenen Stand der Technik die Merkmale übernommen, dass die Verbindungsvorrichtung wie auch immer am Untergrund starr zu verankern ist und sie einen Bolzen aufweist, welcher bei hergestellter Verbindung von unten her in eine nach unten hin offene Ausnehmung des am Untergrund zu verankernden Teils (Säule, Mast oder Wand) hineinragt und mit den Begrenzungsflächen der Ausnehmung verklebt ist.

Als erfindungsgemäße Verbesserung dazu wird vorgeschlagen, dass die Verbindungsvorrichtung einen Klebstoffaufnahmekörper aufweist, welcher einen für die Aufnahme von Klebstoff geeigneten Hohlraum begrenzt, wobei der Hohlraum nach oben hin durch eine Deckfläche begrenzt ist, wobei die Deckfläche durch den Bolzen durchdrungen ist und in Längsrichtung des Bolzens verschiebbar ist, wobei zwischen dem Durchbruch in der Deckfläche und der Mantelfläche des Bolzens ein offener Spalt besteht.

Durch diese Bauweise ist komfortabel erreichbar, dass während der Montage eine sehr große Menge Klebstoff genau passend in den Ringraum zwischen dem Bolzen und der Ausnehmung des zu verankernden Teils eingebracht wird. Damit wird es möglich, den Ringraum sehr breit zu machen, also die Ausnehmung in dem zu verankernden Teil mit sehr viel größerem Durchmesser auszubilden als dem Durchmesser des Bolzens. Solange der Klebstoff noch nicht ausgehärtet ist, besteht damit ein großer Bereich innerhalb dessen der zu verankernde Teil gegenüber dem Bolzen verschiebbar ist, was gleichbedeutend damit ist, dass während der Montage der Einstellbereich der Position des zu verankernden Teils gegenüber dem Untergrund groß ist.

Die Erfindung wird an Hand von stilisierten Zeichnungen zu beispielhaften erfindungsgemäßen Verbindungsvorrichtungen veranschaulicht:
- Fig. 1:: zeigt in seitlicher Schnittansicht eine beispielhafte extrem einfache erfindungsgemäße Verbindungsvorrichtung in einer Situation während des Montagevorganges.
- Fig. 2:: zeigt in seitlicher Schnittansicht eine zweite beispielhafte erfindungsgemäße Verbindungsvorrichtung, wobei gegenüber der Darstellung von Fig. 1 der zu verankernde Teil 3 noch etwas weiter angehoben ist und die Darstellung des Untergrundes weggelassen ist.

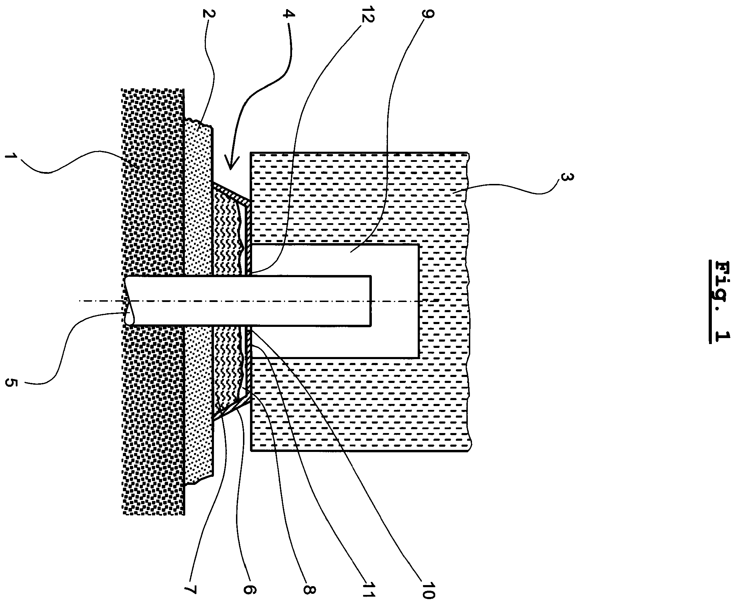

Fig. 1 zeigt einen Untergrund 1, eine auf diesen aufgebrachte Mörtelschicht 2, einen oberhalb dieser zu verankernden Teil 3 und eine Verbindungsvorrichtung 4.

Der Untergrund 1 kann beispielsweise eine Rohdecke eines Gebäudes sein oder eine Betonschicht eines Platzes im Freien. Die Mörtelschicht 2 ist an der Oberseite des Untergrundes 1 aufgebracht, um durch ihre eigene Oberseite ein definiertes Höhenniveau für weitere darüber anzuordnende Teile bereitzustellen.

Die Verbindungsvorrichtung 4 umfasst einen Bolzen 5, einen Klebstoffaufnahmekörper 6 und eine Klebstoffportion 7. Während der in Fig. 1 gezeigten Situation befindet sich die Klebstoffportion 7 in dem durch den Klebstoffaufnahmekörper 6 umschlossenen Hohlraum 8 und ist noch im Zustand ihrer Topfzeit - also noch nicht ausgehärtet - und zwecks Anbringung in ihrer letztendlichen Position noch fließfähig. Typischerweise kann die Topfzeit für den verwendeten Klebstoff im Bereich von 20 bis 50 Minuten liegen.

Der Bolzen 5 ist starr mit dem Untergrund 1 verbunden, beispielsweise in eine Bohrung im Untergrund 1 gesteckt und mit Klebemörtel darin verklebt. Er ragt von der Oberseite der Mörtelschicht 2 empor und durch die Klebstoffportion 7 und den Klebstoffaufnahmekörper 6 hindurch in eine Ausnehmung 9 an dem zu verankernden Teil 3 hinein.

Die Ausnehmung 9 verläuft von der Bodenfläche des zu verankernden Teils 3 nach oben hin in diesen hinein; typischerweise ist die Ausnehmung 9 als vertikal ausgerichtete Sacklochbohrung mit kreisförmiger Querschnittsfläche ausgebildet.

Am Klebstoffaufnahmekörper 6 verläuft der Bolzen 5 durch den Hohlraum 8 und durch eine Öffnung 10 in der Deckfläche 11 hindurch. Die Öffnung 10 ist breiter als die Querschnittsfläche des Bolzens 5, sodass also zwischen der Mantelfläche des Bolzens 5 und der Mantelfläche der Öffnung 10 ein offener Spalt 12 besteht,

Im Verlauf des Vorganges des Verankerns wird der zu verankernde Teil 3 gegenüber der in Fig. 1 dargestellten Position weiter zum Untergrund 1 hin nach unten bewegt. Dabei drückt die Bodenfläche des zu verankernden Teils 3 von oben her gegen die Deckfläche 11 des Klebstoffaufnahmekörpers 6 und verschiebt diese nach unten, wodurch der Klebstoffaufnahmekörper 6 zwischen dem zu verankernden Teil 3 und der Mörtelschicht 2 platt gedrückt wird. Bei diesem Plattdrücken verringert sich das Volumen des Hohlraums 8, sodass die Klebstoffportion 7 unter Druck gerät und an der Mantelfläche des Bolzens 5 entlang durch den Spalt 12 hindurch in die Ausnehmung 9 an dem zu verankernden Teil 3 hineingequetscht wird.

Während der verbleibenden Topfzeit des Klebstoffes der nun in der Ausnehmung 9 um den Bolzen 5 herum befindlichen Klebstoffportion 7 kann der zu verankernde Teil 3 noch gegenüber dem Bolzen 5 - und damit gegenüber dem Untergrund 1 - bewegt werden. Damit kann die Position des zu verankernden Teils 3 gegenüber dem Untergrund 1 in komfortabler Weise exakt einjustiert werden.

Indem die Klebstoffportion 7 zu Beginn durch den Klebstoffaufnahmekörper 6 sehr gut definierbar gehalten wird und indem sie in weiterer Folge sehr gut gesteuert in die Ausnehmung 9 eingebracht wird, kann problemlos eine sehr große Klebstoffportion 7 verwendet werden, womit auch eine relativ zur Dicke des Bolzens 5 sehr breite Ausnehmung 9 vorgesehen werden kann, womit problemlos ein sehr breiter Einstellbereich für die Positionierung des zu verankernden Teils 3 gegenüber dem Untergrund 1 bereitgestellt werden kann.

Damit die Montage komfortabel funktioniert und damit auch eine ausreichende Menge Klebstoff im Hohlraum des Klebstoffaufnahmekörpers 6 komfortabel Platz finden kann, sollte die Deckfläche des Klebstoffaufnahmekörpers 6 in der zur Querschnittsfläche des Bolzens 5 liegenden Ebene breiter sein als die Öffnungsfläche der Ausnehmung 9 in dem zu verankernden Teil 3. Die Deckfläche braucht dazu nicht unbedingt eben zu sein, sie kann beispielsweise auch - anders als in den Zeichnungen dargestellt - nach Art eines Hutes gewölbt sein, wobei nur die Krempe der hutartigen Form einen größeren Durchmesser aufweist als die Öffnungsfläche der Ausnehmung 9.

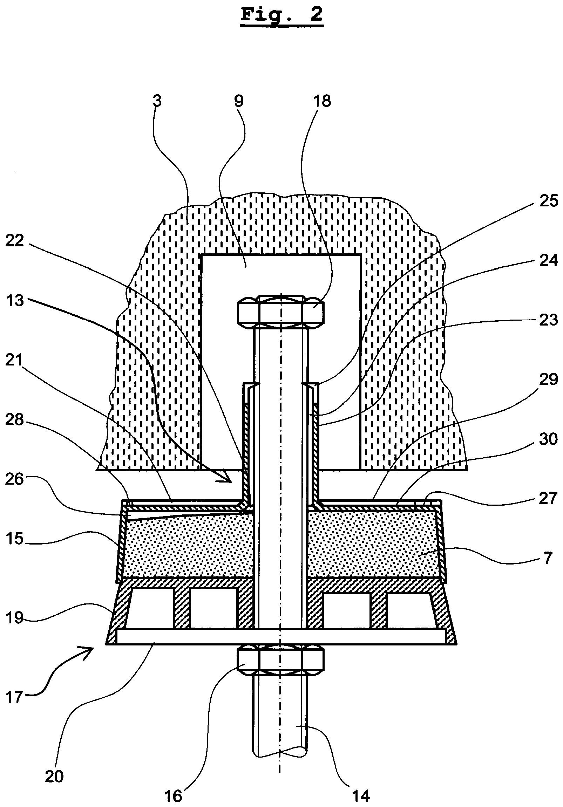

In Fig. 2 ist nur der über dem Untergrund befindliche Teil der erfindungsgemäßen Verbindungsvorrichtung 13 dargestellt. Diese weist wiederum einen Bolzen 14, einen Klebstoffaufnahmekörper 15 und eine Klebstoffportion 7 auf. Weiters umfasst sie eine untere Gewindemutter 16, einen Stützteil 17 und eine obere Gewindemutter 18.

Der Klebstoffaufnahmekörper 15 liegt in diesem Fall nicht an einer Mörtelschicht auf, sondern wird von dem als Gewindebolzen ausgebildeten Bolzen 14 getragen. Dazu ist an dem Bolzen 14 die untere Gewindemutter 16 aufgeschraubt, welche unmittelbar den Stützteil 17 trägt, welcher seinerseits den Klebstoffaufnahmekörper 15 trägt.

Durch auf- oder abschrauben der unteren Gewindemutter 16 entlang des Bolzens 14 kann somit die Höhe des Fußpunktes des zu verankernden Teils 3 komfortabel sowohl grob als auch fein eingestellt werden.

Im gezeigten Beispiel ist der Stützteil 17 aus einem oberen Spritzgussteil 19 aus einem sehr festen Kunststoff und einer diesen von unten her stützenden metallischen Scheibe 20 zusammengesetzt. Gegenüber einer monolithischen Ausführung, welche die gleichen Funktionen erfüllt, können damit Herstellkosten eingespart werden.

Die Deckfläche 21 weist wiederum eine Öffnung 22 auf, durch welche der Bolzen 14 hindurch verläuft. Von der Öffnung 22 aus ragt aus der Deckfläche 21 heraus ein röhrenförmiger Fortsatz 23 nach oben, welcher oben offen ist und in die Ausnehmung 9 mündet. Der röhrenförmige Fortsatz 23 hat den gleichen Innendurchmesser wie die Öffnung 22; er umschließt wie die Öffnung 22 den Bolzen 14 mit einem offenen Spalt 24.

Durch den röhrenförmiger Fortsatz 23 wird erreicht, dass der Klebstoff der Klebstoffportion 7 beim Herstellen der Verklebung zwischen dem Bolzen 14 und den Begrenzungsflächen der Ausnehmung 9 in dem zu verankernden Teil 3 schon in einen sehr hoch liegenden Bereich der Ausnehmung 9 eingespritzt wird, womit gegenüber einer tieferliegenden Einspritzöffnung eine sehr gute Füllung der Ausnehmung 9 besser zuverlässig erreichbar ist.

Am oberen Öffnungsbereich weist der röhrenförmige Fortsatz 23 entlang des Umfanges seiner Mantelfläche mehrere Zahnfortsätze 25 auf, deren Zahnspitzen zur Mittelachse hin ausgerichtet sind und in den Furchen des Gewindes des Bolzens 14 enden. Dadurch ist der Klebstoffaufnahmekörper 15 bis zu einer nicht allzu hohen Grenzkraft gegen Verschiebung längs des Bolzens 14 gehalten, wodurch das Füllen des Klebstoffaufnahmekörpers 15 mit der Klebstoffportion 7 erleichtert wird.

Das Füllen des Klebstoffaufnahmekörpers 15 mit der Klebstoffportion 7 erfolgt am besten dann, wenn die Verbindungsvorrichtung 13 schon am Untergrund verankert ist, sich der zu verankernde Teil 3 aber noch nicht über der Verbindungsvorrichtung 13 befindet. In der in Fig. 2 gezeigten Relativposition zueinander werden in Reihenfolge von unten nach oben die untere Gewindemutter 16, der Stützteil 17 und der Klebstoffaufnahmekorper 15 am Bolzen 14 übereinander angeordnet, also auf den Bolzen 14 aufgeschraubt, bzw. aufgesteckt. Der untere Randbereich des Klebstoffaufnahmekörpers 15 berührt den oberen Randbereich des Stützteils 17 (weitgehend) dichtend und zwischen der oberen Deckfläche des Stützteils 17 und der Deckfläche 21 des Klebstoffaufnahmekörpers 15 ist ein kreisringförmiger Hohlraum 26 eingeschlossen, in welchen die Klebstoffportion 7 einzubringen ist.

Die Deckfläche 21 des Klebstoffaufnahmekörpers 15 weist neben der Öffnung 22, durch welche hindurch der Bolzen 14 verläuft, noch zwei Durchbruchsöffnungen 27, 28 auf, die sich diametral zueinander gegenüberliegen. Bestimmungsgemäß ist zum Füllen des Hohlraums 26 mit Klebstoffmasse an der größeren Durchbruchsöffnung 27 die Abgabespitze eine Abgabevorrichtung für Klebstoff anzusetzen und Klebstoff durch die Durchbruchsöffnung 27 hindurch in den Hohlraum 26 hineinzudrücken. Die kleinere Durchbruchsöffnung 28 dient dazu, die durch die Klebstoffportion 7 verdrängte Luft aus dem Hohlraum 26 entweichen zu lassen.

Die Oberseite der Deckfläche 21 ist nicht als einfache ebene Fläche ausgebildet, sondern sie weist eine Höhenstruktur auf, welche zumindest einen erhaben liegenden Bereich 29 und zumindest einen tieferliegenden Bereiche 30 aufweist, wobei sich ein tieferliegender Bereich ohne Unterbrechung vom Nahbereich der Öffnung 22 bis zum äußeren Rand der Deckfläche 21 erstreckt. Durch diese Höhenstruktur wird erreicht, dass Luft, welche während der Herstellung der Verklebung mit dem zu verankernden Teil 3 aus der Ausnehmung 9 durch die Klebstoffmasse verdrängt wird, ohne zu schaden abfließen kann.

Die optional zu verwendende, ggf. am oberen Bereich des Bolzens 14 aufgeschraubte obere Gewindemutter 18 dient dazu, die Festigkeit der Verbindung zwischen der Verbindungsvorrichtung 13 und dem zu verankernden Teil 3 gegen Zugkräfte in Längsrichtung des Bolzens 14 zu verbessern.

Beim letztendlich stattfindenden Montagevorgang des zu verankernden Teils 3 an der Verbindungsvorrichtung 13, welche dann schon mit dem Untergrund starr verbunden ist, wird der zu verankernde Teil 3 gegenüber der in Fig. 2 dargestellten Position abgesenkt, bis er nicht nur an den erhabenen Bereichen 29 der Deckfläche 21 oben anliegt, sondern bis er den Klebstoffaufnahmekörper 15 gegenüber dem Stützteil 17 soweit nach unten geschoben hat, dass die Deckfläche 21 am Stützteil 17 unmittelbar anliegt. Während dieses Absenkens umschließt die Mantelfläche des Klebstoffaufnahmekörpers 15 mehr und mehr die Mantelfläche des Stützteils 17. Damit es während des Absenkens des zu verankernden Teils 3 zu keinem Klebstoffaustritt durch die Durchbruchsöffnungen 27, 28 kommt, sind diese Öffnungen durch jeweils einen erhaben liegenden Bereich 29 in der Deckfläche 21 zu führen, weil sie damit durch den zu verankernden Teil verschlossen werden.

Die in Fig. 2 dargestellte Verbindungsvorrichtung 13 kann natürlich auch ohne untere Gewindemutter 16 verwendet werden. Dann liegt der Stützteil 17 direkt am Untergrund oder an einer sonstigen auf diesem angeordneten Zwischenlage - wie beispielsweise einer Mörtelschicht - auf.

Als Klebstoff der Klebstoffportion 7 sollte ein solcher gewählt werden, welcher nach dem Aushärten nicht nur am Material des Bolzens 5 und des zu verankernden Teils 3 haftet, sondern auch am Material des röhrenförmigen Fortsatzes 23.

Die Klebstoffaufnahmekörper 6, 15 sind am besten als eher dünnwandige Kunststoffspritzgussteile auszubilden.

Abweichend zu bisherigen Erklärungen kann die Klebstoffportion 7 auch als Kombination aus Klebstoff und umhüllender Folie ausgebildet sein, welche als Ganzes in den Hohlraum 8, 26 unterhalb der Deckfläche des Klebstoffaufnahmekörpers 6, 15 eingelegt wird.

Vor allem in dem Fall, dass der zu verankernde Teil eine Wand mit eher geringer Dicke ist, ist es aus Platzgründen vorteilhaft, die horizontale Kontur des Klebstoffaufnahmekörpers 6, 15 nicht kreisrund, sondern länglich, typischerweise elliptisch auszubilden, wobei die Längsrichtung der Kontur parallel zur Ebene der Wand liegt.

## Patentansprüche

1. Verbindungsvorrichtung (4, 13) für das starre Verankern eines zu verankernden Teils (3) auf einem Untergrund (1), wobei der zu verankernde Teil (3) eine Säule oder eine Wand ist, wobei die Verbindungsvorrichtung (4, 13) einen Bolzen (5, 14) aufweist, welcher dazu vorgesehen ist, bei hergestellter Verankerung von unten her in eine nach unten hin offene Ausnehmung (9) des zu verankernden Teils (3) hineinzuragen und mit den Begrenzungsflächen der Ausnehmung (9) verklebt zu werden, wobei die Ausnehmung (9) einen größeren Durchmesser als der Bolzen (5, 14) aufweist, **dadurch gekennzeichnet, dass** die Verbindungsvorrichtung (4, 13) einen Klebstoffaufnahmekörper (6, 15) aufweist, welcher einen für die Aufnahme einer Klebstoffportion (7) geeigneten Hohlraum (8, 26) begrenzt, wobei der Hohlraum (8, 26) nach oben hin durch eine Deckfläche (11, 21) begrenzt ist, wobei die Deckfläche (11, 21) durch den Bolzen (5, 14) durchdrungen ist und in Längsrichtung des Bolzens (5, 14) gegenüber diesem verschiebbar ist, wobei zwischen dem Rand der Öffnung (10, 22), durch welche hindurch der Bolzen (5, 14) verläuft, und der Mantelfläche des Bolzens (5, 14) ein offener Spalt (12, 24) besteht, durch welchen hindurch Klebstoff aus der Klebstoffportion (7) an der Mantelfläche des Bolzens (5) entlang in die Ausnehmung (9) an dem zu verankernden Teil (3) quetschbar ist.

2. Verbindungsvorrichtung (13) nach Anspruch 1, **dadurch gekennzeichnet, dass** der Bolzen (14) ein Gewindebolzen ist.

3. Verbindungsvorrichtung (13) nach Anspruch 2, **dadurch gekennzeichnet, dass** am Bolzen (14) in Reihenfolge von unten nach oben eine Gewindemutter (16), ein Stützteil (17) und der Klebstoffaufnahmekörper (15) aufeinander folgen.

4. Verbindungsvorrichtung nach einem der Ansprüche 1 bis 3, **dadurch gekennzeichnet, dass** die Deckfläche (21) einen röhrenförmigen Fortsatz (23) aufweist, welcher sich von der Öffnung (22) aus koaxial zum Bolzen (14) nach oben hin erstreckt, wobei zwischen der Innenmantelfläche des Fortsatzes (23) und der Mantelfläche des Bolzens (14) der freie Spalt (24) liegt.

5. Verbindungsvorrichtung nach einem der Ansprüche 2 bis 4, **dadurch gekennzeichnet, dass** Zahnfortsätze (25) von der Deckfläche (21) aus in die Furchen des Schraubengewindes am Bolzen (14) ragen.

6. Verbindungsvorrichtung nach einem der Ansprüche 1 bis 5, **dadurch gekennzeichnet, dass** die Deckfläche (21) neben der Öffnung (22), durch welche hindurch der Bolzen (14) verläuft, noch zwei weitere Durchbruchsöffnungen (27, 28) aufweist.

7. Verbindungsverrichtung nach einem der Ansprüche 1 bis 6, **dadurch gekennzeichnet, dass** die Deckfläche (21) eine Höhenstruktur aufweist, welche zumindest einen erhaben liegenden Bereich (29) und zumindest einen tieferliegenden Bereich (30) aufweist, wobei sich ein tieferliegender Bereich ohne Unterbrechung vom Nahbereich der Öffnung (22) bis zum äußerer Rand der Deckfläche (21) erstreckt.

8. Verbindungsvorrichtung nach den Ansprüchen 6 und 7, **dadurch gekennzeichnet, dass** die die Durchbruchsöffnungen (27, 28) die Deckfläche (21) an Stellen durchdringen, an denen diese einen erhaben liegenden Bereich (29) aufweist.

9. Verbindungsvorrichtung nach einem der Ansprüche 1 bis 8, **dadurch gekennzeichnet, dass** die horizontale Kontur des Klebstoffaufnahmekörpers (6, 15) nicht kreisrund sondern länglich, bevorzugt elliptisch ist.

## Claims

1. Connecting device (4, 13) for rigidly anchoring a part to be anchored (3) to an underground (1), the part to be anchored (3) being a column or a wall, the connecting device (4, 13) comprising a bolt (5, 14) which, when the part has been anchored, is intended to project into a recess (9) of the part to be anchored (3), which recess is downwardly open, and be adhered to the boundary surfaces of the recess (9), the recess (9) comprising a larger diameter than the bolt (5, 14), **characterised in that** the connecting device (4, 13) comprises an adhesive receptacle (6, 15) which delimits a cavity (8, 26) suitable for receiving an adhesive portion (7), the cavity (8, 26) being upwardly delimited by a cover surface (11, 21), the cover surface (11, 21) being penetrated by the bolt (5, 14) and it being possible to move the cover surface in the longitudinal direction of the bolt (5, 14) relative to said bolt, an open gap (12, 24) being located between the edge of the opening (10, 22), through which the bolt (5, 14) extends, and the peripheral surface of the bolt (5, 14), through which gap adhesive can be squeezed, along the peripheral surface of the bolt (5), into the recess (9) on the part to be anchored (3) from the adhesive portion (7).

2. Connecting device (13) according to claim 1, **characterised in that** the bolt (14) is a threaded bolt.

3. Connecting device (13) according to claim 2, **characterised in that**, in a sequence from bottom to top, a threaded nut (16), a support part (17) and the adhesive receptacle (15) follow one another on the bolt (14).

4. Connecting device according to any of claims 1 to 3, **characterised in that** the cover surface (21) comprises a tubular projection (23) which extends upwardly from the opening (22) in a coaxial manner to the bolt (14), the open gap (24) being located between the inner peripheral surface of the projection (23) and the peripheral surface of the bolt (14).

5. Connecting device according to any of claims 2 to 4, **characterised in that** toothed projections (25) project from the cover surface (21) into the grooves of the screw thread on the bolt (14).

6. Connecting device according to any of claims 1 to 5, **characterised in that**, in addition to the opening (22) through which the bolt (14) extends, the cover surface (21) comprises two additional through-openings (27, 28).

7. Connecting device according to any of claims 1 to 6, **characterised in that** the cover surface (21) has a height profile which has at least one upper-lying region (29) and at least one lower-lying region (30), a lower-lying region extending continually from the vicinity of the opening (22) to the outer edge of the cover surface (21).

8. Connecting device according to claims 6 and 7, **characterised in that** the through-openings (27, 28) penetrate the cover surface (21) at points at which said cover surface comprises an upper-lying region (29).

9. Connecting device according to any of claims 1 to 8, **characterised in that** the horizontal contour of the adhesive receptacle (6, 15) is not circular but oblong, preferably elliptic.

## Revendications

1. Dispositif de connexion (4, 13) pour l'ancrage rigide d'une pièce à ancrer (3) sur un support (1), la pièce à ancrer (3) étant un pilier ou un mur, le dispositif de connexion (4, 13) présentant un boulon (5, 14) qui est prévu pour, une fois l'ancrage effectué, pénétrer par le bas dans un évidement (9) de la pièce à ancrer (3) ouvert vers le bas et être collé aux surfaces de délimitation de l'évidement (9), l'évidement (9) ayant un diamètre supérieur au boulon (5, 14), **caractérisé en ce que** le dispositif de connexion (4, 13) présente un corps récepteur de colle (6, 15) qui délimite une cavité (8, 26) adaptée pour recevoir une dose de colle (7), la cavité (8, 26) étant délimitée vers le haut par une surface de recouvrement (11, 21), la surface de recouvrement (11, 21) étant traversée par le boulon (5, 14) et pouvant être déplacée dans la direction longitudinale du boulon (5, 14) par rapport à ce dernier, et **en ce qu'**il est prévu une fente ouverte (12, 24) entre le bord de l'ouverture (10, 22) à travers laquelle s'étend le boulon (5, 14) et la surface latérale du boulon (5, 14), fente à travers laquelle la colle issue de la dose de colle (7) peut être pressée le long de la surface latérale du boulon (5) dans l'évidement (9) sur la pièce à ancrer (3).

2. Dispositif de connexion (13) selon la revendication 1, **caractérisé en ce que** le boulon (14) est un boulon fileté.

3. Dispositif de connexion (13) selon la revendication 2, **caractérisé en ce que** sur le boulon (14) on trouve dans l'ordre, de bas en haut, un écrou fileté (16), un élément de support (17) et le corps récepteur de colle (15).

4. Dispositif de connexion selon l'une des revendications 1 à 3, **caractérisé en ce que** la surface de recouvrement (21) présente un prolongement tubulaire (23) qui s'étend vers le haut à partir de l'ouverture (22) de façon coaxiale par rapport au boulon (14), dans lequel il y a un espace libre (24) entre la surface latérale intérieure du prolongement (23) et la surface latérale du boulon (14).

5. Dispositif de connexion selon l'une des revendications 2 à 4, **caractérisé en ce que** des prolongements de dents (25) dépassent de la surface de recouvrement (21) dans les rainures du filetage du boulon, (14).

6. Dispositif de connexion selon l'une des revendications 1 à 5, **caractérisé en ce que** la surface de recouvrement (21) présente, outre l'ouverture (22) à travers laquelle s'étend le boulon (14), encore deux autres ouvertures de passage (27, 28) .

7. Dispositif de connexion selon l'une des revendications 1 à 6, **caractérisé en ce que** la surface de recouvrement (21) présente une structure en hauteur comprenant au moins une zone surélevée (29) et au moins une zone inférieure (30), la zone inférieure s'étendant sans interruption depuis la proximité de l'ouverture (22) jusqu'au bord extérieur de la surface de recouvrement (21).

8. Dispositif de connexion selon les revendications 6 et 7, **caractérisé en ce que** les ouvertures de passage (27, 28) pénètrent dans la surface de recouvrement (21) à des endroits où cette dernière présente une zone surélevée (29).

9. Dispositif de connexion selon l'une des revendications 1 à 8, **caractérisé en ce que** le contour horizontal du corps récepteur de colle (6, 15) n'est pas rond, mais allongé, de préférence elliptique.
